# FASCICULE DE BREVET EUROPEEN

(11) **EP 2 099 627 B1**
(45) Date de publication et mention de la délivrance du brevet: **05.05.2010**
(21) Numéro de dépôt: 07822728.7
(22) Date de dépôt: 20.11.2007
(51) Int. Cl.: B60G 21/05, B60G 7/00

(54) **ESSIEU TORSIBLE À CONTRÔLE ACTIF DE L'ANGLE DE BRAQUAGE PAR UNE ARTICULATION HYDRO ÉLASTIQUE**
TORSIONSELASTISCHE ACHSE MIT AKTIVER STEUERUNG DES LENKWINKELS UNTER EINSATZ EINER HYDROELASTISCHEN VERBINDUNG
TORSIONALLY FLEXIBLE AXLE WITH ACTIVE CONTROL OF THE STEERING ANGLE USING A HYDRO-ELASTIC JOINT

(30) Priorité: 21.11.2006 FR 0610210
(43) Date de publication de la demande: 16.09.2009
(73) Titulaire: Société de Technologie MICHELIN, 63000 Clermont-Ferrand (FR); MICHELIN Recherche et Technique S.A., 1763 Granges-Paccot (CH)
(72) Inventeur: VAXELAIRE, Alain, 63540 Romagnat (FR); NEAU, Xavier, 63000 Clermont-Ferrand (FR)
(74) Mandataire: Lasson, Cédric Y. M.
(86) Numéro de dépôt international: PCT/EP2007/062551
(87) Numéro de publication internationale: WO 2008/061973

(56) Documents cités:
- EP-A1- 1 405 740
- WO-A-97/31794
- FR-A1- 2 855 459
- JP-A- 62 184 249
- JP-A- 2002 012 015

## Description

L'invention concerne un essieu suspendu pour véhicule automobile, plus précisément un essieu comprenant une traverse torsible et un dispositif de pilotage du braquage des roues.

De tels essieux trouvent plus particulièrement leur application pour la suspension et le support des roues arrières d'un véhicule automobile. En effet, dans les virages, les roues arrières d'un véhicule subissent des efforts latéraux dans la direction du virage qu'il convient de contrôler de sorte à améliorer la prise de virage et la stabilité du véhicule.

On connaît, notamment du document WO-2004/089665, qui comporte les caractéristiques du préambule de la revendication 1 un essieu torsible à contrôle actif de l'angle de braquage au moyen d'un vérin télescopique. Toutefois, cette solution n'est pas optimale notamment relativement aux contraintes d'encombrement à proximité de la roue et à la précision dans le contrôle de l'angle de braquage.

L'invention vise notamment à résoudre les problèmes de l'art antérieur en proposant un essieu torsible à contrôle actif de l'angle de braquage qui prévoit d'intégrer au niveau du porte roue la fonction pivot de braquage et la fonction actionnement de la rotation autour dudit pivot, ledit actionnement étant réalisé au moyen d'un dispositif de braquage à articulation hydro élastique.

A cet effet, l'invention propose un essieu suspendu pour véhicule automobile comprenant une traverse torsible dont chacune des extrémités porte un bras rigide comprenant des moyens d'articulation par rapport à la caisse du véhicule afin de permettre le débattement de suspension, ledit bras portant en outre un porte roue, dans lequel chaque porte roue est monté sur chaque bras par l'intermédiaire d'un pivot et, à distance dudit pivot, par l'intermédiaire d'un dispositif de braquage de la roue, ledit dispositif de braquage comprenant une articulation hydro élastique comprenant un corps extérieur et un organe logé dans ledit corps, ledit corps étant solidaire de l'un parmi le bras et le porte roue et l'organe étant solidaire de l'autre parmi le bras et le porte roue, ladite articulation comprenant en outre un élément élastiquement déformable qui est interposé entre ledit organe et ledit corps, ledit élément étant conformé pour former au moins deux chambres étanches entre respectivement une partie dudit élément et la surface intérieure dudit corps, chacune des chambres étant prévue pour permettre, par compression/expansion desdites chambres, des déplacements dudit organe relativement au corps extérieur, ledit dispositif de braquage comprend en outre un système de pilotage du braquage, ledit système comprenant des moyens agencés pour faire varier le volume d'un fluide incompressible présent dans respectivement chacune des chambres de sorte à piloter les déplacements de l'organe et donc le braquage de la roue par rapport bras.

D'autres objets et avantages de l'invention apparaîtront dans la description qui suit, faite en référence aux figures annexées, dans lesquelles :
- la figure 1 est une vue en perspective d'un essieu selon un mode de réalisation de l'invention, sur lequel deux roues sont montées en rotation ;

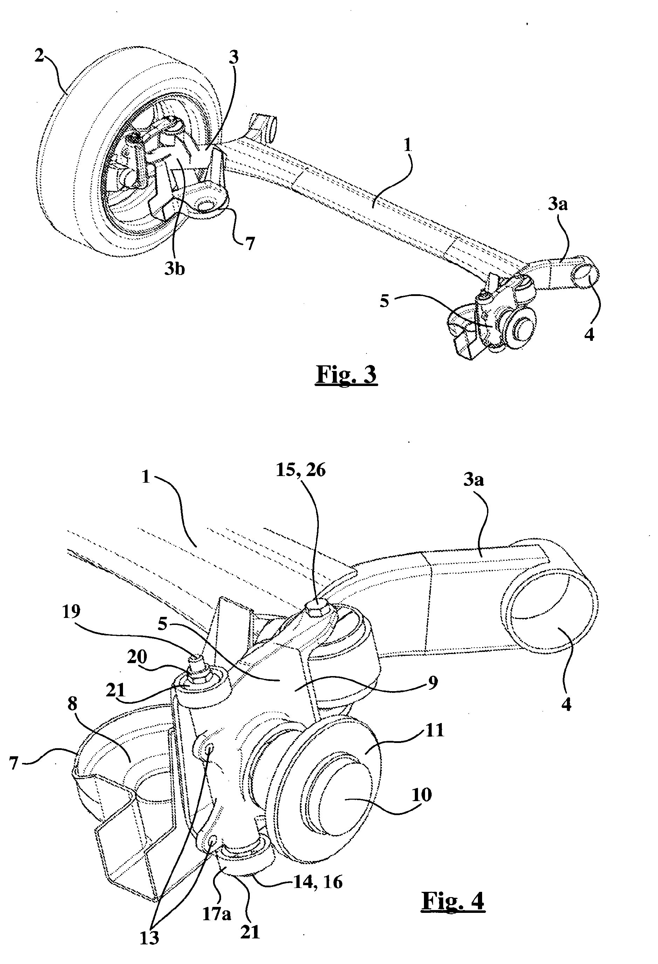

- les figures 2 et 3 sont des vues analogues à celle de la figure 1 dans lesquelles respectivement une roue a été enlevée (figure 2) et une roue et le système de freinage ont été enlevés ;
- les figures 4 et 5 sont des représentations agrandies d'une extrémité de l'essieu du mode de réalisation de la figure 1, respectivement selon deux angles de vue différents ;
- lesfigures 6 et 7 sont des représentations analogues à celles des figures 4 et 5 selon un angle de vue montrant les axes du pivot et de l'organe de braquage, la figure 7 montrant en outre la position de la roue relativement à ces axes ;
- la figure 8 est une représentation schématique et en coupe longitudinale de la disposition d'un élément élastiquement déformable dans une articulation du pivot d'un essieu selon l'invention ;
- les figures 9 sont des vues respectivement en coupe transversale (figure 9a), en coupe longitudinale selon l'axe b-b (figure 9b), en coupe longitudinale selon l'axe c-c (figure 9c) et en perspective écorchée (figure 9d) de l'articulation hydro élastique prévue dans le mode de réalisation de la figure 1.

On définit l'angle de braquage d'une roue comme l'angle séparant, dans un plan horizontal parallèle au sol, le plan de la roue du plan médian du véhicule. Le plan de la roue est le plan, lié à la roue, qui est perpendiculaire à l'axe de la roue et qui passe par le centre de l'aire de contact statique au sol lorsque la roue est verticale. Le plan de la roue est ainsi solidaire de l'axe de la roue et son orientation varie comme celle de la roue. Lors d'un braquage, l'avant de la roue se déplace vers l'intérieur, respectivement vers l'extérieur, on parle alors de pince, respectivement d'ouverture.

Outre l'angle de braquage, la position angulaire du plan de roue par rapport à la caisse du véhicule est définie par l'angle de carrossage d'une roue qui est l'angle séparant, dans un plan transversal perpendiculaire au sol, le plan de la roue du plan médian du véhicule.

L'invention propose un essieu suspendu pour véhicule automobile comprenant une traverse torsible 1 et du type à contrôle actif de l'angle de braquage des roues 2 montés sur ledit essieu.

De préférence, l'essieu selon l'invention est configuré de manière que le braquage soit sécuritaire lorsque l'actionneur du braquage est inactif ou en panne, c'est-à-dire que les roues de l'essieu soit pincées d'une valeur au moins à celles pratiquées pour des essieux torsibles conventionnels. Dans ce cas, l'action du dispositif de braquage a pour but de débraquer les roues pour atteindre des réglages sans pince (roues parallèles) qui sont très favorables en matière d'usure du pneumatique et de consommation mais impraticables du point de vue du comportement du véhicule à la limite ou en cas de manoeuvre d'urgence. De cette manière, une panne totale ou un fonctionnement limité de l'actionneur n'a pas de conséquence sur la sécurité du véhicule. La logique inverse (selon laquelle l'essieu serait au contraire configuré pour maintenir les roues parallèles en dehors de toute action du dispositif de braquage) est tout à fait utilisable mais elle exige que le bon fonctionnement de l'actionneur soit garanti en toutes circonstances au cours du roulage.

En relation avec les figures, on décrit un mode de réalisation d'un essieu suspendu dont chacune des extrémités de la traverse 1 porte un bras rigide 3 comprenant des moyens d'articulation par rapport à la caisse du véhicule (non représentée) afin de permettre le débattement de suspension. Dans le mode de réalisation représenté, le moyen d'articulation est formé d'un alésage 4 d'axe 4a dans lequel une pièce complémentaire liée à la caisse est destinée à être insérée. En outre, le moyen d'articulation est porté par une première partie 3a du bras 3.

Concernant la traverse torsible 1, l'invention n'est pas limitée à une réalisation particulière. Par exemple, une telle traverse peut être réalisée sur la base des enseignements des documents EP-0 904 211 ou EP-1 265 763 dans lesquels deux tubes coaxiaux sont prévus pour pouvoir présenter un débattement angulaire élastique de l'un par rapport à l'autre. Une traverse torsible 1 selon le document FR-2 840 561 peut également être utilisée dans le cadre de l'invention.

Chaque extrémité de la traverse porte en outre un porte roue 5 qui est solidarisé à ladite extrémité par l'intermédiaire d'une deuxième partie 3b du bras rigide 3. Dans le mode de réalisation représenté, le bras 3 présente une forme incurvée vers l'extérieure dont la zone centrale est solidarisée à l'extrémité de la traverse 1 par encastrement, chaque parties 3a, 3b s'étendant respectivement de part et d'autre de la zone centrale. Toutefois, d'autres configurations peuvent être envisagées, par exemple que la traverse 1 soit solidarisée à l'avant ou à l'arrière du bras 3. La traverse 1 relie les bras 3 pour assurer d'abord le guidage latéral et ensuite la raideur antiroulis de l'essieu.

Par ailleurs, la deuxième partie 3b porte également une pièce 7 destinée à supporter le ressort et l'amortisseur (non représentés) de la roue 2. La pièce 7 présente un logement d'appui 8 pour ledit ressort, une chape destinée à recevoir ledit amortisseur et des pattes d'accrochage 9 qui sont fixées sur la deuxième partie 3b afin de positionner la pièce 7 du coté intérieur du bras 3.

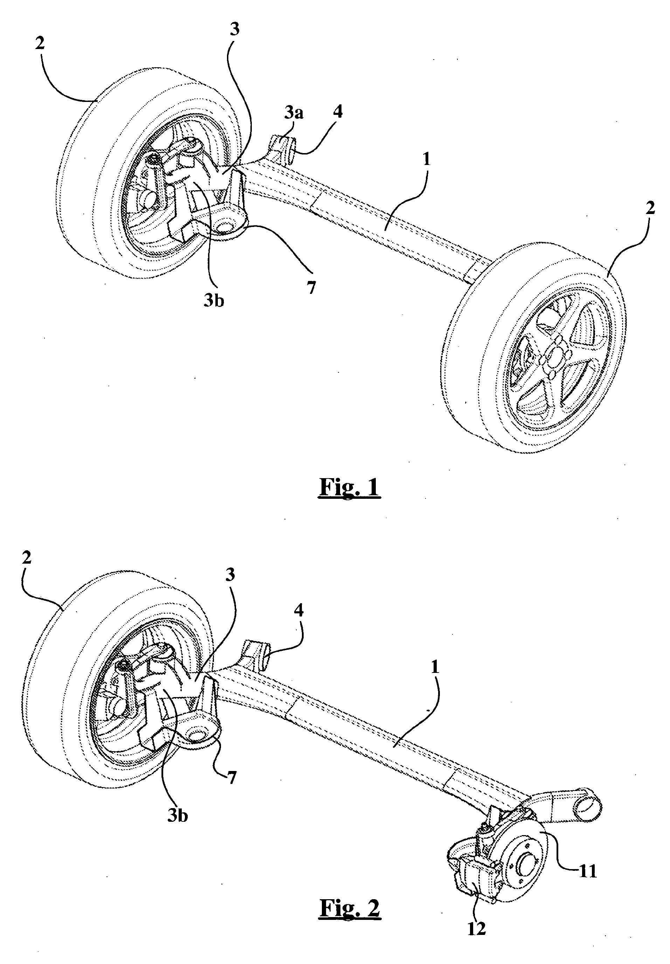

Le porte roue 5 comprend une platine rigide 9 de forme sensiblement parallélépipédique dont la partie centrale comprend le moyen d'association de la roue sous la forme d'un moyeu 10 sur lequel est monté en rotation le disque de frein 11 et la roue 2. Par ailleurs, la figure 2 représente la disposition de l'étrier de frein 12 relativement à la platine 9 par l'intermédiaire de deux orifices d'association 13. Ainsi, la roue 2 et le système de freinage 11, 12 sont solidaires en déplacement de la platine 9, la roue 2 et le disque 11 étant par ailleurs mobile en rotation par rapport à ladite platine.

La platine 9 porte en outre, de part et d'autre du moyeu, deux axes 14, 15 sensiblement verticaux. La distance entre les axes 14, 15 conditionne l'angle de braquage possible pour une course donnée de l'actionneur dudit braquage, par exemple une dimension de 100 mm permet un angle de braquage de l'ordre de 3° pour une course de 5 mm.

Un premier axe 14 est formé au voisinage des orifices d'association 13 de l'étrier de frein 12 de sorte à former un pivot 16 d'articulation entre le porte roue 5 et l'extrémité de la deuxième partie 3b. Le pivot 16 est ainsi agencé pour permettre le braquage de la roue 2 par rapport à la caisse du véhicule.

Dans le mode de réalisation représenté, le pivot 16 comprend un étrier 17 solidaire de l'extrémité du bras 3, ledit étrier comprenant deux pattes 17a pourvues chacune d'un logement qui enserre de part et d'autre un orifice 18 traversant l'extrémité de la platine 9. En outre, une tige 19 est insérée dans l'orifice 18, ladite tige étant immobilisée en rotation par rapport au bras 3 au moyen de respectivement un écrou 20.

Le pivot 16 comprend deux articulations élastiques 21 qui sont prévues de part et d'autre du porte roue 5 de sorte à conférer une filtration élastique à la fonction pivot. Pour ce faire, un élément élastiquement déformable 22 est interposé entre la surface intérieure de chaque logement et la surface extérieure de l'orifice 18 qui est disposée en regard. Pour maximiser la rigidité de carrossage sous efforts et couples latéraux, les deux articulations 21 sont écartées au maximum.

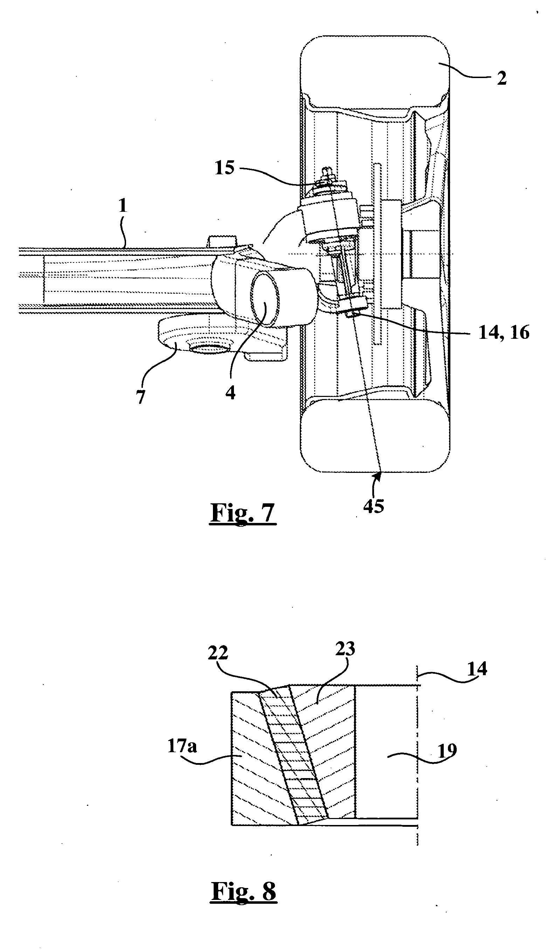

En relation avec la figure 8, on décrit ci-dessous la structure d'une articulation élastique 21 qui est dimensionnée de manière à transmettre les différentes composantes du torseur base de roue 2 en contrôlant les diverses raideurs: forte raideur radiale et axiale et faible raideur torsionnelle pour minimiser le couple de braquage.

L'élément élastiquement déformable 22 présente une génératrice d'axe inclinée par rapport à l'axe de rotation 14 du pivot 16. En outre, un feuilletage est formé avec une pièce rigide 23 de sorte à obtenir les rigidités mentionnées ci-dessus. Par exemple, une articulation 21 présentant une raideur radiale supérieure à 10 000 N/mm, une forte raideur conique et une forte capacité de charge axiale peut être obtenue.

Selon une réalisation non représentée, le pivot peut être rigide avec des propriétés de torsion libre pure. Par exemple, le pivot peut comprendre des articulations mécaniques de type paliers lisses, roulements, butées.

A l'opposé du pivot 16, la platine 9 comprend un étrier 24 dans lequel est associé un dispositif de braquage de la roue 2. Le dispositif de braquage comprend une articulation hydro élastique comprenant un élément élastiquement déformable 25 qui est interposé entre un organe 26 et un corps extérieur 27 dans lequel ledit organe est logé.

Dans le mode de réalisation représenté, le corps 27 est solidarisé de la deuxième partie 3b du bras 3 par l'intermédiaire de deux pattes 28 qui sont issues d'un logement 29 du corps 27, lesdites pattes étant fixées sur ladite deuxième partie. La platine 9 est solidaire de l'organe 26 de sorte à actionner la rotation de la platine 9 autour du pivot 16. Toutefois, la configuration inverse pourrait être envisagée, à savoir le corps 27 solidaire de la platine 9 et l'organe 26 solidaire du bras 3.

Le pivot 16 et le dispositif de braquage sont déportés vers l'intérieur de la roue 2, et le pivot 16 est incliné afin que son axe 14 coupe le plan du sol à proximité du plan médian de la roue. De plus, lorsque l'essieu porte sa charge de référence, l'intersection de l'axe 14 du pivot 16 avec le sol est de préférence située en arrière de l'axe de la roue, par exemple d'une distance sensiblement égale à la chasse du pneu de sorte à minimiser l'énergie nécessaire pour le braquage.

Pour permettre les déplacements relatifs entre l'organe 26 et le corps 27, et donc le braquage de la roue 2 par rapport au bras 3, l'élément élastiquement déformable 25 est conformé pour comprendre au moins deux chambres étanches 30, 31 entre respectivement une partie dudit élément et la surface intérieure dudit corps.

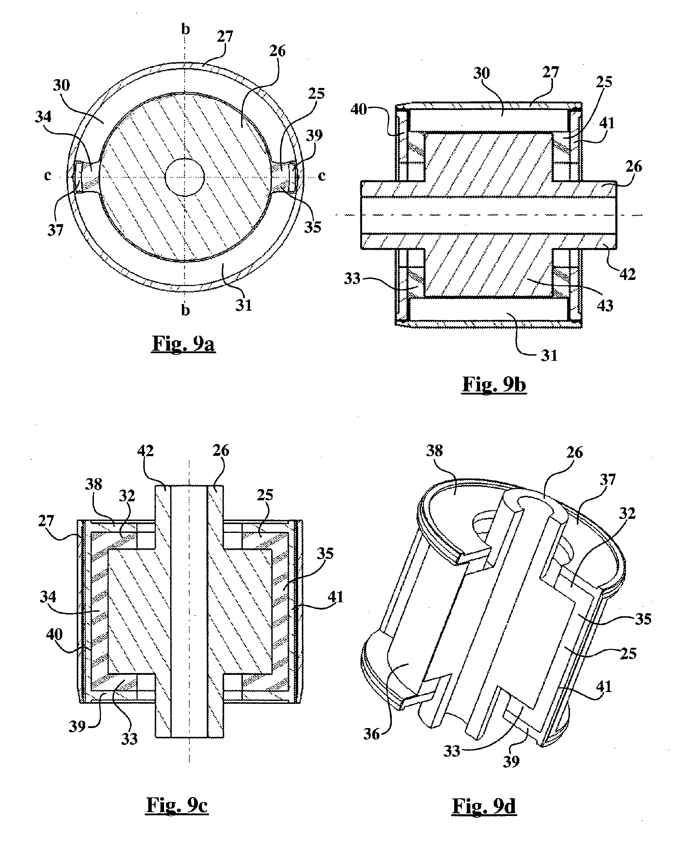

En relation avec les figures 9, on décrit ci-dessous un mode de réalisation d'une articulation hydro élastique qui permet de combiner un encombrement réduit, des caractéristiques de raideur élastique optimales, une course de déplacement maximisée et une bonne endurance.

Le corps extérieur 27 présente une géométrie sensiblement cylindrique qui est ouverte de part et d'autre de son axe de sorte à permettre l'introduction de l'élément élastiquement déformable 25 et de l'organe 26. Le corps extérieur 27 est rigide, par exemple formé en métal ou en matière plastique éventuellement renforcée.

L'élément élastiquement déformable 25 comprend un bloc d'une seule pièce en matériau élastique qui présente :
- deux couronnes 32, 33 respectivement supérieure et inférieure qui sont logées coaxialement dans le corps 27 ;
- deux bras axiaux 34, 35 qui s'étendent entre les couronnes 32, 33, lesdits bras étant diamétralement opposés l'un par rapport à l'autre ; et
- une peau 36 s'étendant circonférentiellement de part et d'autre desdits bras.

L'élément élastiquement déformable 25 comprend en outre une cage de maintien 37 qui est surmoulée par le bloc en matériau élastique. Ainsi, l'élément élastiquement déformable 25 peut être réalisé en une pièce en intégrant les différentes géométries mentionnées ci-dessus. Par ailleurs, la surface extérieure de la cage 37 est pourvue de joints d'étanchéité respectivement au niveau des couronnes 32, 33 et des bras 34, 35. Les joints peuvent être surmoulés en même temps que le bloc en matériau élastique.

La cage 37 présente une géométrie analogue à celle du bloc en matériau élastique, c'est-à-dire comprenant deux couronnes 38, 39 reliées par deux bras axiaux 40, 41. Toutefois, la cage est ouverte latéralement entre les bras 40, 41. En outre, la cage 37 est réalisée en matériau rigide, par exemple en métal ou en matière plastique éventuellement renforcée. Ainsi, l'élément élastiquement déformable 25 couple les fonctions de filtration élastique des efforts, de transmission des efforts de braquage de l'organe 26 et d'étanchéité.

L'organe 26 qui, comme le corps 27, est réalisé en matériau rigide, comprend une tige 42 qui est intégrée à une armature cylindrique 43. La tige 42 présente un alésage permettant l'association de l'organe 26 avec chacune des pattes de l'étrier 24 par l'intermédiaire d'un écrou 44. L'élément élastiquement déformable 25 est disposé autour de l'armature 43, les extrémités de la tige 42 saillant axialement de part et d'autre dudit élément et du corps 27. Plus particulièrement, les couronnes 32, 33 sont disposées contre l'armature 43 et de part et d'autre axialement de celle-ci, et les bras 34, 35 sont également disposés contre ladite armature et de part et d'autre radialement de celle-ci.

Une fois que l'organe 26 et l'élément 25 sont montés dans le corps 27, deux chambres 30, 31 étanches et opposées sont formées en regard de la surface extérieure de l'organe 26. Chaque chambre 30, 31 est délimitée radialement par la surface intérieure du corps 27 et intérieurement par la peau 36 (ou directement par l'armature 43 en l'absence de peau), axialement par une partie de la surface plane de chacune des couronnes 32, 33 qui sont disposées en regard, et latéralement par les bras 34, 35.

Selon cette configuration, les compression/expansion des chambres 30, 31 provoquent des déplacements radiaux de l'organe 26 relativement au corps extérieur 27. Plus précisément, les deux chambres 30, 31 permettent le déplacement de l'organe 26 dans une direction principale radiale d'axe b-b, la présence de l'élément 25 permettant la filtration élastique des efforts exercés sur l'organe 26. Ainsi, en prévoyant que l'organe 26 soit d'axe parallèle à l'axe 14 de rotation du pivot 16 et en positionnant l'axe b-b de façon convenable, les déplacements radiaux de l'organe 26 actionnent le braquage de la roue 2 relativement à la caisse du véhicule.

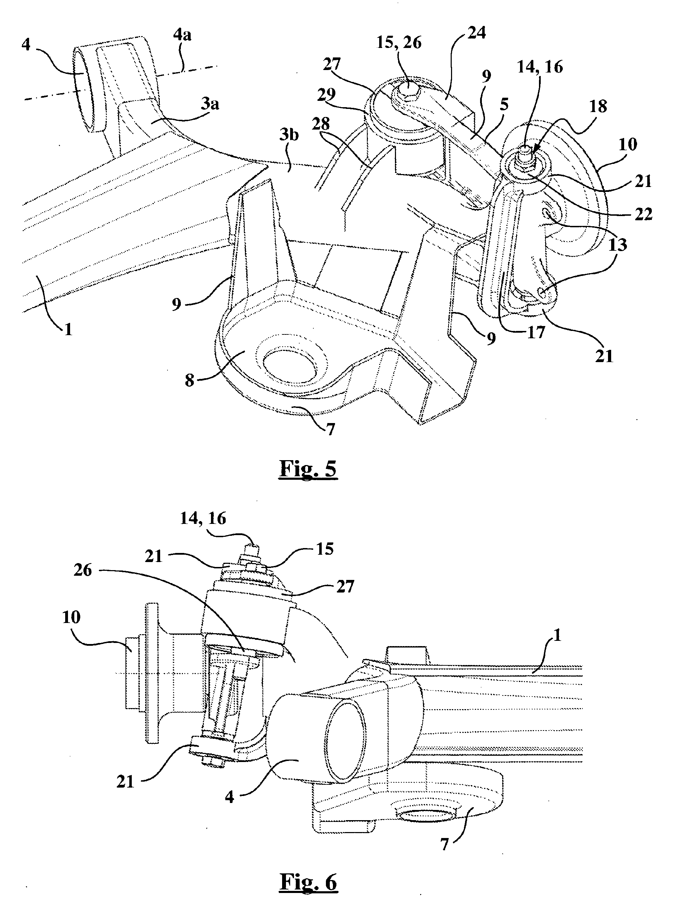

Par ailleurs, comme montré plus précisément sur les figures 6 et 7, les axes 14, 15 du pivot 16 et de l'organe 26 sont inclinés vers l'intérieur par rapport à l'axe vertical. En effet, les axes 15, 16 étant décalés vers l'intérieur par rapport à la roue 2, il est souhaitable d'incliner lesdits axes d'un angle agencé pour qu'ils coupent le sol au voisinage du centre de l'air de contact statique 45 du pneu 2 sur ledit sol.

Le dispositif de braquage comprend en outre un système de pilotage (non représenté) des déplacements radiaux de l'organe 26. Pour ce faire, le système de pilotage comprend des moyens (non représentés) qui sont agencés pour faire varier le volume d'un fluide incompressible présent dans respectivement chacune des chambres 30, 31.

Le dispositif de braquage peut être piloté en fonction de divers paramètres de roulage du véhicule (par exemple vitesse, accélération longitudinale ou transversale, effort de freinage, position du volant, vitesse de rotation du volant, couple exercé sur le volant, roulis, vitesse de roulis, accélération de roulis, lacet, vitesse de lacet, accélération de lacet, efforts sur les roues y compris la charge verticale, type de conduite ou comportement souhaité par le conducteur).

L'agencement de l'articulation hydro élastique décrit ci-dessus est particulièrement avantageux en ce que l'élément élastiquement déformable 25 est agencé de sorte à être sollicité essentiellement en cisaillement lors des déplacements radiaux de l'organe 26 relativement au corps 27.

- En effet, les couronnes 32, 33 étant disposées coaxialement à l'organe 26, avec leurs surfaces respectivement solidaires du corps 27 et dudit organe, lesdites couronnes sont sollicitées essentiellement en cisaillement.

De même pour les bras 34, 35 qui sont les autres parties de l'élément sollicitées en principal, ceux-ci s'étendent axialement avec leurs surfaces intérieure et extérieure respectivement solidaires de l'organe 26 et du corps 27.

En outre, l'élément 25 étant solidarisé au corps 27 grâce au serrage sur la cage 37 qui maintien les zones 32-35 en contact avec ledit corps lors des déplacements radiaux de l'organe 25, la cage 37 permet le transfert des efforts aux zones du bloc de matériau élastique qui sont sollicitées en cisaillement.

Selon la réalisation décrite, la raideur élastique de l'articulation lorsque l'écoulement de fluide est libre entre les chambres 30, 31 peut être minimisée en augmentant la dimension des zones travaillant en cisaillement, notamment la dimension axiale des couronnes 32, 33. Cette augmentation de l'épaisseur ne nuit pas significativement à la raideur en gonflement qui reste très importante de sorte à limiter l'énergie perdue dans le gonflement des chambres 30, 31 sous pression.

En effet, pour une raideur de gonflement donnée, c'est-à-dire pour un même profil de zone déformable, la raideur élastique est plus faible en cisaillement qu'en traction - compression. Ainsi, pour une même raideur élastique donnée, l'épaisseur des zones déformables devra être plus importante en cisaillement qu'en traction - compression, de sorte que la raideur de gonflement sera moins importante dans ce dernier cas.

Par conséquent, cette réalisation permet d'atteindre un grand ratio de raideur radiale entre l'état où la circulation du fluide est bloquée et l'état où cette circulation est permise. Par exemple, ce ratio peut être compris entre 4 et 40. En outre, les performances d'endurance du dispositif de braquage sont également optimisées, et ce avec la possibilité d'obtenir des courses de déplacement de l'organe 26 qui sont importantes, par exemple de l'ordre de +/-5 mm.

Enfin, la valeur de la raideur de gonflement est également importante, ce qui permet d'obtenir les avantages suivants :
- minimisation des pertes d'énergie en déformation élastique sous gonflement des chambres, ce qui permet d'optimiser le rendement en poussée ;
- augmentation de la précision du dispositif de braquage ;
- diminution de la fatigue des chambres, et donc meilleure endurance de l'élément élastiquement déformable puisqu'il y a moins de déformations sous pression ;

En outre, l'articulation peut présenter une taille réduite qui est compatible avec son implantation au voisinage de la roue 2. Par exemple, l'articulation peut présenter une hauteur et un diamètre de l'ordre de 70 mm.

## Revendications

1. Essieu suspendu pour véhicule automobile comprenant une traverse torsible (1) dont chacune des extrémités porte un bras rigide (3) comprenant des moyens d'articulation (4) par rapport à la caisse du véhicule afin de permettre le débattement de suspension, ledit bras portant en outre un porte roue (5), ledit essieu étant **caractérisé en ce que** chaque porte roue (5) est monté sur chaque bras (3) par l'intermédiaire d'un pivot (16) et, à distance dudit pivot, par l'intermédiaire d'un dispositif de braquage de la roue, ledit dispositif de braquage comprenant une articulation hydro élastique comprenant un corps extérieur (27) et un organe (26) logé dans ledit corps, ledit corps étant solidaire de l'un parmi le bras (3) et le porte roue (5) et ledit organe étant solidaire de l'autre parmi le bras (3) et le porte roue (5), ladite articulation comprenant en outre un élément élastiquement déformable (25) qui est interposé entre ledit organe et ledit corps, ledit élément étant conformé pour former au moins deux chambres étanches (30, 31) entre respectivement une partie dudit élément et la surface intérieure dudit corps, chacune des chambres (30, 31) étant prévue pour permettre, par compression/expansion desdites chambres, des déplacements dudit organe relativement au corps extérieur (27), ledit dispositif de braquage comprend en outre un système de pilotage du braquage, ledit système comprenant des moyens agencés pour faire varier le volume d'un fluide incompressible présent dans respectivement chacune des chambres (30, 31) de sorte à piloter les déplacements de l'organe (25) et donc le braquage de la roue (2) par rapport au bras (3).

2. Essieu suspendu selon la revendication 1, **caractérisé en ce que** chacune des chambres (30, 31) est prévue en regard de la surface extérieure de l'organe (26) pour permettre, par compression/expansion desdites chambres, des déplacements radiaux dudit organe relativement au corps extérieur (27), ledit organe étant d'axe (15) parallèle à l'axe (14) du pivot (16).

3. Essieu suspendu selon la revendication 2, **caractérisé en ce que** les axes (14, 15) du pivot (16) et de l'organe (26) sont inclinés vers l'intérieur par rapport à l'axe vertical.

4. Essieu suspendu selon la revendication 2 ou 3, **caractérisé en ce que** l'élément élastiquement déformable (25) est agencé de sorte à être sollicité essentiellement en cisaillement lors des déplacements radiaux de l'organe (26).

5. Essieu suspendu selon la revendication 4, **caractérisé en ce que** l'élément élastiquement déformable (25) comprend au moins une couronne (32, 33) qui est disposée dans ledit corps coaxialement à l'organe (26), les surfaces planes de ladite couronne étant respectivement solidaires dudit corps et dudit organe de sorte que ladite couronne soit sollicitée essentiellement en cisaillement lors des déplacements radiaux de l'organe (26).

6. Essieu suspendu selon la revendication 5, **caractérisé en ce qu'**il comprend deux couronnes (32, 33) respectivement supérieure et inférieure qui sont disposées axialement de part et d'autre de l'organe (26).

7. Essieu suspendu selon la revendication 6, **caractérisé en ce que** l'élément élastiquement déformable (25) comprend en outre au moins un bras axial (34, 35) qui s'étend entre les couronnes (32, 33), la surface intérieure desdits bras étant solidaire de l'organe (26) et la surface extérieure dudit bras étant solidaire du corps (27) de sorte que ledit bras soit sollicité essentiellement en cisaillement lors des déplacements radiaux dudit organe.

8. Essieu suspendu selon la revendication 7, **caractérisé en ce que** l'élément élastiquement déformable (25) comprend deux bras (34, 35) qui sont diamétralement opposés de part et d'autre de l'organe (26).

9. Essieu suspendu selon la revendication 8, **caractérisé en ce que** l'articulation hydro élastique comprend deux chambres (30, 31) qui sont délimitées par les bras (34, 35) et les couronnes (32, 33).

10. Essieu suspendu selon l'une quelconque des revendications 4 à 6, **caractérisé en ce que** l'élément élastiquement déformable (25) comprend une cage de maintien (37) qui est surmoulée par un matériau élastique, ledit élément étant solidarisé au corps (27) grâce au serrage sur ladite cage.

11. Essieu suspendu selon l'une quelconque des revendications 1 à 10, **caractérisé en ce que** le pivot (16) est rigide avec des propriétés de torsion libre pure.

12. Essieu suspendu selon l'une quelconque des revendications 1 à 10, **caractérisé en ce que** le pivot (16) comprend au moins une articulation comprenant un élément élastiquement déformable (22) qui est interposé entre un corps (17a) solidaire du bras (3) et un organe (19) solidaire du porte roue (5).

13. Essieu suspendu selon la revendication 12, **caractérisé en ce que** l'élément élastiquement déformable (22) possède une génératrice d'axe inclinée par rapport à l'axe (14) de rotation du pivot (16).

14. Essieu suspendu selon l'une quelconque des revendications 1 à 13, **caractérisé en ce que** le porte roue (5) comprend une platine rigide (9) qui porte l'axe (14) du pivot (16) et l'axe (15) de l'organe (26), lesdits axes étant formés de part et d'autre du moyen d'association (10) de la roue (2).

15. Essieu suspendu selon l'une quelconque des revendications 1 à 14, **caractérisé en ce que** le bras (3) porte également une pièce (7) destinée à supporter l'amortisseur de la roue (2).

16. Essieu suspendu selon l'une quelconque des revendications 1 à 15, **caractérisé en ce que** le bras (3) comprend une première (3a) et une deuxième (3b) partie auxquelles sont respectivement solidarisées les moyens d'articulation (4) et le porte roue (5), la traverse étant solidarisée à la zone centrale du bras (3).

17. Essieu suspendu selon l'une quelconque des revendications 1 à 16, **caractérisé en ce qu'**il est configuré de manière à être pincé lorsque le dispositif de braquage est inactif.

## Claims

1. Suspended axle for a motor vehicle comprising a torsionally flexible beam (1) each of the ends of which carries a rigid arm (3) comprising means (4) of articulation relative to the bodyshell of the vehicle so as to allow suspension travel, the said arm further bearing a wheel carrier (5), the said axle being **characterized in that** each wheel carrier (5) is mounted on each arm (3) via a pivot (16) and, some distance away from the said pivot, via a wheel-steering device, the said steering device comprising a hydroelastic articulation comprising an outer body (27) and a member (26) housed in the said body, the said body being secured to either the arm (3) or the wheel carrier (5) and the said member being secured respectively to either the wheel carrier (5) or the arm (3), the said articulation further comprising an elastically deformable element (25) which is interposed between the said member and the said body, the said element being configured to form at least two sealed chambers (30, 31) between, respectively, a part of the said element and the interior surface of the said body, each of the chambers (30, 31) being designed to allow, through compression/expansion of the said chambers, movements of the said member relative to the outer body (27), the said steering device further comprises a steering operating system, the said system comprising means designed to vary the volume of an incompressible fluid present in each respective one of the chambers (30, 31) so as to bring about the movements of the member (25) and thus the steering of the wheel (2) relative to the arm (3).

2. Suspended axle according to Claim 1, **characterized in that** each of the chambers (30, 31) is provided facing the exterior surface of the member (26) so as to allow, through compression/expansion of the said chambers, radial movements of the said member relative to the outer body (27), the said member being of an axis (15) parallel to the axis (14) of the pivot (16).

3. Suspended axle according to Claim 2, **characterized in that** the axes (14, 15) of the pivot (16) and of the member (26) are inclined inwards with respect to the vertical axis.

4. Suspended axle according to Claim 2 or 3, **characterized in that** the elastically deformable element (25) is arranged in such as way as to experience essentially shear loadings during radial movements of the member (26).

5. Suspended axle according to Claim 4, **characterized in that** the elastically deformable element (25) comprises at least one ring (32, 33) which is positioned in the said body coaxial with the member (26), the flat surfaces of the said ring being secured respectively to the said body and to the said member so that the said ring experiences essentially shear loadings during radial movements of the member (26).

6. Suspended axle according to Claim 5, **characterized in that** it comprises two rings (32, 33) these respectively being an upper ring and a lower ring, which are positioned axially one on each side of the member (26).

7. Suspended axle according to Claim 6, **characterized in that** the elastically deformable element (25) further comprises at least one axial arm (34, 35) which extends between the rings (32, 33), the interior surface of the said arms being secured to the member (26) and the exterior surface of the said arm being secured to the body (27) so that the said arm experiences essentially shear loadings during radial movements of the said member.

8. Suspended axle according to Claim 7, **characterized in that** the elastically deformable element (25) comprises two arms (34, 35) which are diametrically opposed on each side of the member (26).

9. Suspended axle according to Claim 8, **characterized in that** the hydroelastic articulation comprises two chambers (30, 31) which are delimited by the arms (34, 35) and the rings (32, 33).

10. Suspended axle according to any one of Claims 4 to 6, **characterized in that** the elastically deformable element (25) comprises a retaining cage (37) which is overmoulded with an elastic material, the said element being secured to the body (27) by the gripping on the said cage.

11. Suspended axle according to any one of Claims 1 to 10, **characterized in that** the pivot (16) is rigid with pure free torsion properties.

12. Suspended axle according to any one of Claims 1 to 10, **characterized in that** the pivot (16) comprises at least one articulation comprising an elastically deformable element (22) which element is interposed between a body (17a) secured to the arm (3) and a member (19) secured to the wheel carrier (5).

13. Suspended axle according to Claim 12, **characterized in that** the elastically deformable element (22) has a generatrix the axis of which is inclined with respect to the axis (14) of rotation of the pivot (16).

14. Suspended axle according to any one of Claims 1 to 13, **characterized in that** the wheel carrier (5) comprises a rigid mounting plate (9) which bears the axis (14) of the pivot (16) and the axis (15) of the member (26), the said axes being formed one on each side of the attachment means (10) for holding the wheel (2).

15. Suspended axle according to any one of Claims 1 to 14, **characterized in that** the arm (3) also bears a component (7) intended to support the shock absorber for the wheel (2).

16. Suspended axle according to any one of Claims 1 to 15, **characterized in that** the arm (3) comprises a first part (3a) and a second part (3b) to which parts the means (4) of articulation and the wheel carrier (5) are respectively secured, the beam being secured to the central region of the arm (3).

17. Suspended axle according to any one of Claims 1 to 16, **characterized in that** it is configured in such a way as to exhibit toe-in when the steering device is inactive.

## Patentansprüche

1. Gefederte Achse für ein Kraftfahrzeug, die einen verwindbaren Querträger (1) enthält, von dem jedes Ende einen starren Arm (3) trägt, der Einrichtungen (4) zum Anlenken an den Aufbau des Fahrzeugs enthält, um den Federweg zu ermöglichen, wobei der Arm außerdem einen Radhalter (5) trägt, wobei die Achse **dadurch gekennzeichnet ist, dass** jeder Radhalter (5) auf jeden Arm (3) mittels eines Drehzapfens (16) und in Abstand zum Drehzapfen mittels einer Lenkeinschlagvorrichtung des Rads montiert ist, wobei die Lenkeinschlagvorrichtung ein hydroelastisches Gelenk enthält, das einen Außenkörper (27) und ein in dem Körper angeordnetes Organ (26) enthält, wobei der Körper fest mit dem einen, dem Arm (3) oder dem Radhalter (5), verbunden ist, und das Organ mit dem anderen, dem Arm (3) oder dem Radhalter (5), verbunden ist, wobei das Gelenk außerdem ein elastisch verformbares Element (25) enthält, das zwischen das Organ und den Körper eingefügt ist, wobei das Element ausgebildet ist, um mindestens zwei dichte Kammern (30, 31) zwischen jeweils einem Teil des Elements und der Innenfläche des Körpers zu bilden, wobei jede der Kammern (30, 31) vorgesehen ist, um durch Kompression/Expansion der Kammern Verschiebungen des Organs bezüglich des Außenkörpers (27) zu erlauben, wobei die Lenkeinschlagvorrichtung außerdem ein System zur Steuerung des Lenkeinschlags enthält, wobei das System Einrichtungen enthält, die angeordnet sind, um das Volumen eines in jeder der Kammern (30, 31) vorhandenen, nicht komprimierbaren Fluids zu verändern, um die Verschiebungen des Organs (25) und somit den Lenkeinschlag des Rads (2) bezüglich des Arms (3) zu steuern.

2. Gefederte Achse nach Anspruch 1, **dadurch gekennzeichnet, dass** jede der Kammern (30, 31) gegenüber der Außenfläche des Organs (26) vorgesehen ist, um durch Kompression/Expansion der Kammern radiale Verschiebungen des Organs bezüglich des Außenkörpers (27) zu erlauben, wobei das Organ eine Achse (15) parallel zur Achse (14) des Drehzapfens (16) hat.

3. Gefederte Achse nach Anspruch 2, **dadurch gekennzeichnet, dass** die Achsen (14, 15) des Drehzapfens (16) und des Organs (26) bezüglich der senkrechten Achse nach innen geneigt sind.

4. Gefederte Achse nach Anspruch 2 oder 3, **dadurch gekennzeichnet, dass** das elastisch verformbare Element (25) so angeordnet ist, dass es bei den radialen Verschiebungen des Organs (26) im Wesentlichen scherbelastet wird.

5. Gefederte Achse nach Anspruch 4, **dadurch gekennzeichnet, dass** das elastisch verformbare Element (25) mindestens einen Kranz (32, 33) enthält, der im Körper koaxial zum Organ (26) angeordnet ist, wobei die ebenen Flächen des Kranzes fest mit dem Körper bzw. mit dem Organ verbunden sind, so dass der Kranz bei den radialen Verschiebungen des Organs (26) im Wesentlichen scherbelastet wird.

6. Gefederte Achse nach Anspruch 5, **dadurch gekennzeichnet, dass** sie zwei Kränze (32, 33), einen oberen und einen unteren, aufweist, die axial zu beiden Seiten des Organs (26) angeordnet sind.

7. Gefederte Achse nach Anspruch 6, **dadurch gekennzeichnet, dass** das elastisch verformbare Element (25) außerdem mindestens einen axialen Arm (34, 35) enthält, der sich zwischen den Kränzen (32, 33) erstreckt, wobei die Innenfläche der Arme fest mit dem Organ (26) verbunden und die Außenfläche des Arms fest mit dem Körper (27) verbunden ist, so dass der Arm bei den radialen Verschiebungen des Organs im Wesentlichen scherbelastet wird.

8. Gefederte Achse nach Anspruch 7, **dadurch gekennzeichnet, dass** das elastisch verformbare Element (25) zwei Arme (34, 35) enthält, die einander zu beiden Seiten des Organs (26) diametral gegenüberliegen.

9. Gefederte Achse nach Anspruch 8, **dadurch gekennzeichnet, dass** das hydroelastische Gelenk zwei Kammern (30, 31) enthält, die von den Armen (34, 35) und den Kränzen (32, 33) begrenzt werden.

10. Gefederte Achse nach einem der Ansprüche 4 bis 6, **dadurch gekennzeichnet, dass** das elastisch verformbare Element (25) ein Haltegehäuse (37) aufweist, das durch ein elastisches Material überformt wird, wobei das Element durch das Festklemmen am Gehäuse fest mit dem Körper (27) verbunden ist.

11. Gefederte Achse nach einem der Ansprüche 1 bis 10, **dadurch gekennzeichnet, dass** der Drehzapfen (16) starr mit Eigenschaften reiner freier Verwindung ist.

12. Gefederte Achse nach einem der Ansprüche 1 bis 10,
**dadurch gekennzeichnet, dass** der Drehzapfen (16) mindestens ein Gelenk aufweist, welches ein elastisch verformbares Element (22) enthält, welches zwischen einen fest mit dem Arm (3) verbundenen Körper (17a) und ein fest mit dem Radhalter (5) verbundenes Organ (19) eingefügt ist.

13. Gefederte Achse nach Anspruch 12, **dadurch gekennzeichnet, dass** das elastisch verformbare Element (22) eine Mantellinie mit einer bezüglich der Drehachse (14) des Drehzapfens (16) geneigten Achse besitzt.

14. Gefederte Achse nach einem der Ansprüche 1 bis 13, **dadurch gekennzeichnet, dass** der Radhalter (5) eine starre Platte (9) enthält, die die Achse (14) des Drehzapfens (16) und die Achse (15) des Organs (26) trägt, wobei die Achsen zu beiden Seiten der Verbindungseinrichtung (10) des Rads (2) ausgebildet sind.

15. Gefederte Achse nach einem der Ansprüche 1 bis 14, **dadurch gekennzeichnet, dass** der Arm (3) ebenfalls ein Bauteil (7) trägt, das dazu bestimmt ist, den Stoßdämpfer des Rads (2) zu tragen.

16. Gefederte Achse nach einem der Ansprüche 1 bis 15, **dadurch gekennzeichnet, dass** der Arm (3) einen ersten (3a) und einen zweiten Teil (3b) aufweist, mit denen die Anlenkeinrichtungen (4) bzw. der Radhalter (5) fest verbunden sind, wobei der Querträger mit dem zentralen Bereich des Arms (3) fest verbunden ist.

17. Gefederte Achse nach einem der Ansprüche 1 bis 16, **dadurch gekennzeichnet, dass** sie so konfiguriert ist, dass sie festgeklemmt ist, wenn die Lenkeinschlagvorrichtung inaktiv ist.
